# EUROPÄISCHE PATENTSCHRIFT

(11) **EP 2 984 009 B1**
(45) Veröffentlichungstag und Bekanntmachung des Hinweises auf die Patenterteilung: **12.06.2019**
(21) Anmeldenummer: 14718944.3
(22) Anmeldetag: 09.04.2014
(51) Int. Cl.: B65G 21/18, B65G 47/51

(54) **ANLAGE ZUM ZEITLICH BEGRENZTEN AUFBEWAHREN VON GEGENSTÄNDEN**
SYSTEM FOR THE TIME-LIMITED STORAGE OF OBJECTS
DISPOSITIF DE CONSERVATION LIMITÉE DANS LE TEMPS D'OBJETS

(30) Priorität: 12.04.2013 AT 5005113 U
(43) Veröffentlichungstag der Anmeldung: 17.02.2016
(73) Patentinhaber: Rimmer, Karl, 9231 Köstenberg (AT)
(72) Erfinder: SCHELLANDER, Ernst, A-9220 Velden (AT)
(74) Vertreter: KLIMENT & HENHAPEL
(86) Internationale Anmeldenummer: PCT/EP2014/057202
(87) Internationale Veröffentlichungsnummer: WO 2014/167024

(56) Entgegenhaltungen:
- WO-A1-98/54988
- US-A- 3 348 659

## Beschreibung

### GEBIET DER ERFINDUNG

Die Erfindung betrifft eine Anlage zum zeitlich begrenzten Aufbewahren von Gegenständen, umfassend einen Förderer, der entlang einer zumindest teilweise gekrümmten und zumindest teilweise geneigten Bahn bewegbar ist, wobei die Bahn eine räumliche Spirale mit mehreren Umläufen beschreibt und wobei im Betriebszustand des Förderers der Radius der räumlichen Spirale nach oben hin kleiner wird, sodass ein oberer Bahnabschnitt jeweils näher an der zentralen Achse der räumlichen Spirale liegt als der benachbarte untere Bahnabschnitt.

Solche Anlagen werden auch als Puffer bezeichnet und dienen etwa dazu, Gegenstände zu speichern, wenn die Verfügbarkeit von Produktionseinrichtungen durch kurze Störungen oder Unterbrechungen im Materialfluss beeinträchtigt ist.

Die US 3,348,659 offenbart eine Anlage nach dem Oberbegriff des Anspruchs 1.

Dadurch, dass die räumliche Spirale nach oben hin kleiner wird, überdecken sich in Höhenrichtung benachbarte Bahnabschnitte nicht völlig und es können grundsätzlich auf allen Bahnabschnitten Gegenstände auf den Förderer geladen oder vom Förderer entnommen werden. Durch diese pyramidenförmige Anordnung der Bahn des Förderers nimmt der Förderer in der Regel dennoch weniger Grundfläche ein als ein Flächenpuffer (wie ein ebener Spiralpuffer oder ein Puffertisch), bei dem die Gegenstände nur in einer einzigen waagrechten Ebene angeordnet werden können. Unter räumlicher Spirale versteht man hier eine dreidimensionale Spirale, also eine gekrümmte Linie im Raum, die sich mit zunehmender Höhe immer mehr krümmt. Wenn die Linie einmal einen Winkel von 360° durchlaufen hat, dann wurde ein Umlauf der Spirale durchmessen. Jede Spirale hat eine zentrale Achse, welche dem Mittelpunkt der in die Ebene projizierten, entsprechenden ebenen Spirale entspricht. Der Abstand, den jeder Punkt der räumlichen Spirale normal zur zentralen Achse aufweist, kann als Radius der Spirale an dieser Stelle angesehen werden.

### STAND DER TECHNIK

Puffer mit umlaufenden Förderern sind etwa aus der DE 695 06 575 T2 bekannt, mit einem Förderer, der schleifenförmig um einander gegenüber liegende Wenderollen geführt ist und bei dem mehrere gleich große Schleifen übereinander angeordnet sind. Die Größe einer Schleife und damit die Kapazität des als Puffer dienenden Förderers kann verändert werden, indem eine der Wenderollen verschoben wird.

Bei dieser Ausführung bleibt das Problem bestehen, dass eine Be- und Entladung nur jeweils an einem bestimmten Punkt des Förderers möglich ist, der meist mit dem Anfangs- und Endpunkt des Förderers zusammenfällt. Eine Be- oder Entladung an einer anderen Stelle des Förderers, etwa manuell, ist nicht oder nur schwer möglich, weil die einzelnen Schleifen direkt übereinander angeordnet sind und kaum oder nur unzureichend Platz vorhanden ist, um auf den Förderer - bzw. auf den darauf befindlichen Gegenstand - zuzugreifen, wenn die Schleifen des Förderers in Höhenrichtung eng beieinander liegen.

Die US 3 348 659 zeigt einen Förderer, der gemäß Fig. 1 in Form einer räumlichen Spirale angeordnet ist, die nach oben hin geringfügig enger wird. Jedoch ist auch hier eine Zugänglichkeit zu Gegenständen auf den einzelnen Schleifen des Förderers nur dann möglich, wenn die Schleifen in vertikaler Richtung einen großen Abstand zueinander aufweisen, was eine große Bauhöhe des Förderers bedingt.

### DARSTELLUNG DER ERFINDUNG

Es ist daher eine Aufgabe der vorliegenden Erfindung, eine Anlage zum zeitlich begrenzten Aufbewahren von Gegenständen zur Verfügung zu stellen, mit der auch eine Be- und Entladung entlang der Bahn des Förderers erfolgen kann, insbesondere bei geringem vertikalem Abstand der einzelnen Schleifen des Förderers zueinander.

Diese Aufgabe wird durch eine Anlage gemäß Anspruch 1 gelöst, bei welcher ein oberer Bahnabschnitt jeweils um zumindest die Breite des Förderers näher an der zentralen Achse der räumlichen Spirale liegt als der benachbarte untere Bahnabschnitt. Dabei ergibt sich eine besonders gute Zugänglichkeit zum Förderer. Dadurch überlappen sich die Bahnabschnitte nicht, allerdings ist dann auch die Platzersparnis gegenüber ebenen Puffern kleiner oder nicht mehr gegeben. Wenn die zu transportierenden Gegenstände breiter sind als der Förderer, z.B. möglicher Weise im Fall eines Kettenförderers, dann kann sich die Versetzung von direkt übereinander angeordneten Bahnabschnitten nach der Breite der Gegenstände (normal zur Transportrichtung am Förderer) bemessen.

Die räumliche Spirale der gegenständlichen Erfindung ist keine regelmäßig gekrümmte Spirale, wie eine kegelförmige Raumspirale, im streng mathematischen Sinne sein, sondern setzt sich etwa aus gekrümmten und geraden Abschnitten zusammen.

Der Förderer ist über mehrere Wenderollen geführt, wobei zwischen zwei Wenderollen jeweils ein gerader, ansteigender Bahnabschnitt vorgesehen ist. Insbesondere können pro Umlauf der räumlichen Spirale zwei Wenderollen und zwei gerade Bahnabschnitte vorgesehen sein.

Für den Antrieb des erfindungsgemäßen Förderers gibt es grundsätzlich zwei Möglichkeiten: entweder ist ein Endantrieb oder ein Bogenantrieb vorgesehen.

Beim Endantrieb ist eine Antriebseinheit für den Förderer entweder am (im Betriebszustand unten befindlichen) Anfang der räumlichen Spirale oder am (im Betriebszustand oben befindlichen) Ende der räumlichen Spirale vorgesehen. Diese Art des Antriebs ist geeignet, wenn die Anlage ein offenes System darstellt, also wenn die aufzubewahrenden Gegenstände entweder am Anfang der räumlichen Spirale in die Anlage eintreten und am Ende der räumlichen Spirale aus der Anlage austreten, oder wenn die aufzubewahrenden Gegenstände entweder am Ende der räumlichen Spirale in die Anlage eintreten und am Anfang der räumlichen Spirale aus der Anlage austreten. Im Fall des offenen Systems ist ein sogenannter FIFO-Betrieb (first-in-first-out-Betrieb) möglich, wo der zuerst eintretende Gegenstand die Anlage auch zuerst wieder verlässt.

Beim Bogenantrieb werden mehrere Umlenkeinheiten, die der erfindungsgemäße Förderer aufgrund seiner zumindest teilweise gekrümmten Bahn ja haben muss, angetrieben. Diese Art des Antriebs wird gewählt, wenn die erfindungsgemäße Anlage ein geschlossenes System darstellt, der Förderer also eine in der Anlage geschlossene Bahn bildet, also nur eine Stelle sowohl für die planmäßige Zuführung als auch die Entnahm von Gegenständen vorgesehen ist. Dies ist dann notwendig, wenn zuerst Gegenstände aus der erfindungsgemäßen Anlage zu einer Bearbeitungsstation verbracht werden und anschließend die bearbeiteten Gegenstände wieder in die erfindungsgemäße Anlage zurückgefördert werden. Da in der Regel mehrere Umlenkeinheiten, wie Wenderollen, vorhanden sind, muss die Antriebsgeschwindigkeit im Falle von mehreren angetriebenen Umlenkeinheiten aufeinander abgestimmt werden.

Unabhängig davon, ob ein End- oder Bogenantrieb vorgesehen ist, kann aus Gründen der Platzersparnis der Förderer innerhalb der räumlich spiralförmigen Bahn die beiden Enden der räumlich spiralförmigen Bahn miteinander verbinden. Der Förderer verläuft also vom oberen Ende der räumlich spiralförmigen Bahn zurück zum unteren Anfang der räumlich spiralförmigen Bahn, sodass der Förderer eine geschlossene Bahn aufweist, wobei sich die Rückführung eben innerhalb der räumlich spiralförmigen Bahn befindet.

Die Verbindung der beiden Enden der spiralförmigen Bahn wird im Falle des Bogenantriebs in einem Winkel kleiner als 90°, bevorzugt kleiner gleich 75°, besonders bevorzugt kleiner gleich 60°, insbesondere kleiner gleich 45°, im Besonderen kleiner gleich 30°, besonders bevorzugtkleiner gleich 15° ausgeführt sein, sodass Gegenstände dort nicht verrutschen können oder sich dort nicht gegenseitig berühren. Im Falle des Endantriebs befinden sich auf diesem Bahnabschnitt keine Gegenstände, sodass dieser auch senkrecht zwischen den beiden Enden der spiralförmigen Bahn verlaufen kann.

Die gegenständliche Erfindung kann vorteilhaft verwirklicht werden, indem der Förderer ein Kettenförderer ist mit in der Kette eingehängten Transportbehältern für die aufzubewahrenden Gegenstände, oder indem der Förderer ein Bandförderer ist, auf den die aufzubewahrenden Gegenstände aufgelegt werden können.

### WEGE ZUR AUSFÜHRUNG DER ERFINDUNG

Die Erfindung wird anhand zweier schematischer Figuren, die jeweils ein mögliches Ausführungsbeispiel darstellen, näher erläutert, wobei
- Fig. 1: eine erfindungsgemäße Anlage mit Endantrieb zeigt und
- Fig. 2: eine erfindungsgemäße Anlage mit Bogenantrieb.

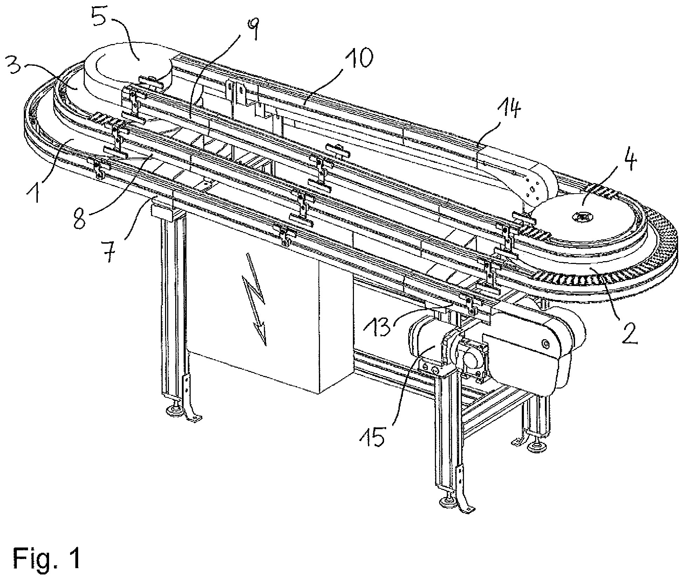

In Fig. 1 ist eine Anlage mit Endantrieb 15 dargestellt. Der Förderer ist hier als Bandförderer ausgebildet, wobei sich der Anfang 13 der räumlich spiralförmigen Bahn beim ersten geraden Bahnabschnitt 7 (an seinem Anfang, wenn hier nach links gefördert wird) befindet und das Ende 14 der räumlich spiralförmigen Bahn beim sechsten geraden Bahnabschnitt 10 (wenn hier entsprechend nach rechts gefördert wird).

Die Förderbahn setzt sich zusammen aus
dem ersten geraden Bahnabschnitt 7,
dem Abschnitt um die erste Wenderolle 1,
den zweiten, nicht gut sichtbaren geraden Bahnabschnitt auf der Rückseite der Anlage,
dem Abschnitt um die zweite Wenderolle 2,
dem dritten geraden Bahnabschnitt 8,
dem Abschnitt um die dritte Wenderolle 3,
den vierten, nicht gut sichtbaren geraden Bahnabschnitt auf der Rückseite der Anlage,
dem Abschnitt um die vierte Wenderolle 4,
dem fünften geraden Bahnabschnitt 9,
dem Abschnitt um die fünfte Wenderolle 5 und,
dem sechsten geraden Bahnabschnitt 10.

Die Förderbahn bildet somit eine räumliche Spirale mit zweieinhalb Umläufen. Nach dem Ende des sechsten geraden Bahnabschnitts 10 wird der Förderer innerhalb der Wenderollen 1-5 bzw. der Bahnabschnitte 7-9 senkrecht zum Anfang 13 der räumlich spiralförmigen Bahn zurückgeführt. Dies ist nicht nachteilig, da bei der Ausführung mit Endantrieb die aufzubewahrenden Gegenstände entweder am Anfang 13 aufgegeben und spätestens beim Ende 14 entnommen werden, oder, bei umgekehrter Förderrichtung, am Ende 14 aufgegeben und spätestens am Anfang 13 entnommen werden.

Während des Betriebs wird immer eine Förderrichtung eingehalten, es kommt zu keiner Umkehr der Förderrichtung. Es werden immer nur von einer Seite Gegenstände in den Puffer befördert und von der anderen Seite entnommen.

Das Be- und Entladen kann jeweils händisch oder automatisiert erfolgen, wobei im letzteren Fall bekannte Weichen-, Pick-Up- oder Pick & Place-Systeme zur Anwendung kommen können. Durch den erfindungsgemäßen pyramidenförmigen Verlauf der Förderbahn können die Gegenstände jedoch auch von einer beliebigen Stelle des Förderers im Bereich der räumlich spiralförmigen Bahn - händisch oder automatisiert - entnommen werden, insbesondere entlang der geraden Bahnabschnitte 7-10. Für die Entnahme der Gegenstände im Bereich der Wenderollen 1-5 müsste deren Abdeckung verkleinert werden, um Zugang zu den Gegenständen zu erhalten.

Die Bahn des Förderers steigt - im dargestellten Betriebszustand - nur im Bereich der geraden Bahnabschnitte 7-10 an, indem diese nach oben geneigt angeordnet sind. Die Wenderollen 1-5 sind eben ausgebildet und waagrecht ausgerichtet.

Der dritte gerade Bahnabschnitt 8 ist gegenüber dem ersten geraden Bahnabschnitt 7 um die Breite des Bahnabschnitts nach innen versetzt, gleiches gilt für den fünften 9 im Verhältnis zum dritten Bahnabschnitt 8 und die geraden Bahnabschnitte auf der Rückseite der Anlage. Die erste, dritte und fünfte Wenderolle 1, 3, 5 sind konzentrisch zueinander angeordnet und haben eine gemeinsame Drehachse. Gleiches gilt für die zweite und vierte Wenderolle 2, 4, die ebenfalls eine gemeinsame Drehachse haben und der ersten, dritten und fünften Wenderolle 1, 3, 5 gegenüber liegen. Die zentrale Achse der räumlichen Spirale befindet sich somit in der Ebene der beiden Drehachsen in der Mitte zwischen den beiden Drehachsen.

Die einzelnen geraden Bahnabschnitte 7-10 werden auf beiden Seiten durch zwei Schienen begrenzt. Im Bereich der Wenderollen 1-5 ist zumindest an der Außenseite der Förderbahn eine durchgehende Wand vorgesehen.

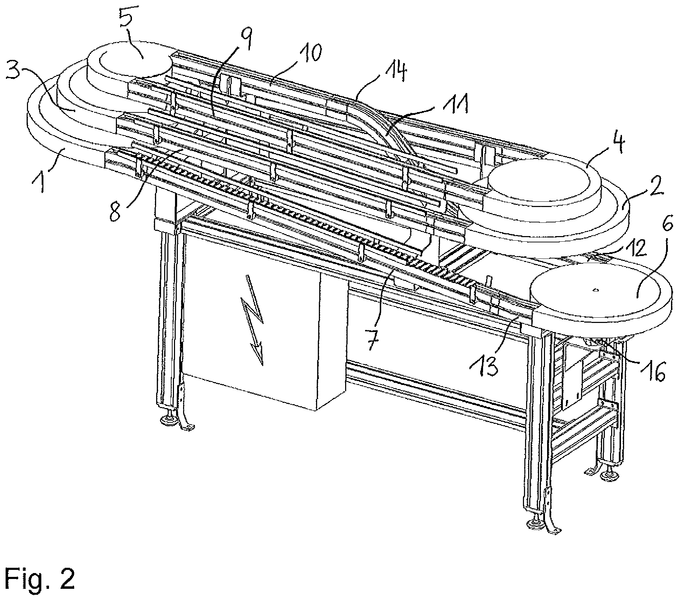

Die in Fig. 2 dargestellte Anlage unterscheidet sich von jener aus Fig. 1 dadurch, dass der sechste gerade Bahnabschnitt 10 nach dem Ende 14 der räumlich spiralförmigen Bahn in einen siebenten geraden Bahnabschnitt 11 übergeht, der nach unten geneigt verläuft, sodann in einen annähernd - im Betriebszustand - waagrecht angeordneten achten geraden Bahnabschnitt 12 übergeht, nach welchem der Förderer um eine sechste Wenderolle 6 geführt wird, um wieder zum Anfang 13 der räumlich spiralförmigen Bahn zurückgeführt zu werden.

Bei dieser Ausführung kann die Förderrichtung während des Betriebs laufend geändert werden: es können unbearbeitete Gegenstände in Richtung vom Anfang 13 zum Ende 14 der räumlich spiralförmigen Bahn in die Anlage gefördert werden, diese Gegenstände können anschließend in Richtung vom Ende 14 zum Anfang 13 aus der Anlage gefördert werden, etwa zu einer Bearbeitungsstation, und die bearbeiteten Gegenstände könnten anschließend wieder in Richtung vom Anfang 13 zum Ende 14 in die Anlage gefördert werden, um später wieder in Richtung vom Ende 14 zum Anfang 13 aus der Anlage gefördert zu werden, etwa zu einer weiteren Bearbeitungsstation.

Der Antrieb in Fig. 2 erfolgt im Unterschied zu Fig. 1 mittels eines Bogenantriebs 16, mit welchem die sechste Wenderolle 6 angetrieben wird. Der Umfang der übrigen Wenderollen 1-5 ist so auszulegen, dass diese mit den Umfangsgeschwindigkeiten in den einzelnen Etagen der räumlichen Spirale korreliert (kaskadierter Bogenantrieb).

Für die Ausführungen nach beiden Fig. 1 und 2 gilt, dass der Antrieb entweder kontinuierlich oder getaktet erfolgen kann. Entsprechend ergibt sich - insbesondere bei großen Abmessungen der Gegenstände - in letzterem Fall ein staudruckloser Betrieb, während sonst ein Staubetrieb vorliegen kann.

Die Pufferkapazität der erfindungsgemäßen Anlagen kann einfach durch Änderung der Länge der geraden Bahnabschnitte, durch Änderung der Breite der geraden und der gekrümmten Bahnabschnitte (also der Breite des Förderers) und/oder durch Änderung der Anzahl der Umläufe der spiralförmigen Förderbahn angepasst werden.

### BEZUGSZEICHENLISTE

- 1: erste Wenderolle
- 2: zweite Wenderolle
- 3: dritte Wenderolle
- 4: vierte Wenderolle
- 5: fünfte Wenderolle
- 6: sechste Wenderolle
- 7: erster gerader Bahnabschnitt
- 8: dritter gerader Bahnabschnitt
- 9: fünfter gerader Bahnabschnitt
- 10: sechster gerader Bahnabschnitt
- 11: siebenter gerader Bahnabschnitt
- 12: achter gerader Bahnabschnitt
- 13: Anfang der räumlich spiralförmigen Bahn
- 14: Ende der räumlich spiralförmigen Bahn
- 15: Endantrieb
- 16: Bogenantrieb

## Patentansprüche

1. Anlage zum zeitlich begrenzten Aufbewahren von Gegenständen, umfassend einen Förderer, der entlang einer zumindest teilweise gekrümmten und zumindest teilweise geneigten Bahn bewegbar ist, wobei die Bahn eine räumliche Spirale mit mehreren Umläufen beschreibt und wobei im Betriebszustand des Förderers der Radius der räumlichen Spirale nach oben hin kleiner wird, sodass ein oberer Bahnabschnitt (8, 9) jeweils näher an der zentralen Achse der räumlichen Spirale liegt als der benachbarte untere Bahnabschnitt (7, 8), wobei der Förderer über mehrere Wenderollen (1-5) geführt ist, wobei zwischen zwei einander gegenüber liegenden Wenderollen jeweils ein gerader, ansteigender Bahnabschnitt (7-9) vorgesehen ist,
wobei die zentrale Achse der räumlichen Spirale in der Ebene einer ersten Drehachse eines ersten Satzes von konzentrisch angeordneten und um die erste Drehachse drehbaren Wenderollen (1, 3, 5) und einer zweiten Drehachse eines zweiten Satzes von konzentrisch angeordneten und um die zweite Drehachse drehbaren Wenderollen (2, 4) in der Mitte zwischen der ersten und der zweiten Drehachse liegt, und
wobei die um die erste Drehachse drehbaren Wenderollen (1, 3, 5) den um die zweite Drehachse drehbaren Wenderollen (2, 4) gegenüber liegen,
**dadurch gekennzeichnet, dass** ein oberer Bahnabschnitt (8, 9) jeweils um zumindest die Breite des Förderers näher an der zentralen Achse der räumlichen Spirale als der benachbarte untere Bahnabschnitt (7, 8) liegt.

2. Anlage nach Anspruch 1, **dadurch gekennzeichnet, dass** für den Förderer ein Endantrieb (15) vorgesehen ist.

3. Anlage nach Anspruch 1, **dadurch gekennzeichnet, dass** für den Förderer ein Bogenantrieb (16) vorgesehen ist.

4. Anlage nach einem der Ansprüche 1 bis 3, **dadurch gekennzeichnet, dass** der Förderer innerhalb der räumlich spiralförmigen Bahn die beiden Enden (13, 14)
der räumlich spiralförmigen Bahn miteinander verbindet, wobei der Förderer also vom oberen Ende der räumlich spiralförmigen Bahn zurück zum unteren Anfang der räumlich spiralförmigen Bahn verläuft, sodass der Förderer eine geschlossene Bahn aufweist, wobei sich die Rückführung eben innerhalb der räumlich spiralförmigen Bahn befindet.

5. Anlage nach einem der Ansprüche 1 bis 3, **dadurch gekennzeichnet, dass** der Förderer ein Kettenförderer ist mit in der Kette eingehängten
Transportbehältern für die aufzubewahrenden Gegenstände.

6. Anlage nach einem der Ansprüche 1 bis 3, **dadurch gekennzeichnet, dass** der Förderer ein Bandförderer ist, auf den die aufzubewahrenden Gegenstände aufgelegt werden können.

## Claims

1. A system for the time-limited storage of objects, comprising a conveyor, which can be moved along an at least partially curved and at least partially inclined path, wherein the path describes a spatial spiral having a plurality of revolutions, and wherein the radius of the spatial spiral becomes smaller in the upward direction in the operating state of the conveyor, such that in each case an upper path segment (8, 9) is closer to the central axis of the spatial spiral than the adjacent lower path segment (7, 8), wherein the conveyor is guided via a plurality of turn rollers (1-5), wherein a straight, rising path segment (7-9) is provided between each two opposite turn rollers, wherein the central axis of the spatial spiral lies in the plane of a first axis of rotation of a first set of concentrically arranged turn rollers (1, 3, 5) rotatable about the first axis of rotation and of a second axis of rotation of a second set of concentrically arranged turn rollers (2, 4) rotatable about the second axis of rotation, in the middle between the first and the second axis of rotation, and wherein the turn rollers (1, 3, 5) rotatable about the first axis of rotation are opposite the turn rollers (2, 4) rotatable about the second axis of rotation, **characterised in that** in each case an upper path segment (8, 9) is closer to the central axis of the spatial spiral than the adjacent lower path segment (7, 8) by at least the width of the conveyor.

2. The system according to claim 1, **characterised in that** an end drive (15) is provided for the conveyor.

3. The system according to claim 1, **characterised in that** an arc drive (16) is provided for the conveyor.

4. The system according to any one of claims 1 to 3, **characterised in that** the conveyor connects the two ends (13, 14) of the spatially spiralled path to one another within the spatially spiralled path, wherein the conveyor thus runs from the upper end of the spatially spiralled path back to the lower start of the spatially spiralled path, and therefore the conveyor has a closed path, wherein the return thus is situated within the spatially spiralled path.

5. The system according to any one of claims 1 to 3, **characterised in that** the conveyor is a chain conveyor with transport containers suspended in the chain and intended for the objects to be stored.

6. The system according to any one of claims 1 to 3, **characterised in that** the conveyor is a belt conveyor on which the objects to be stored can be placed.

## Revendications

1. Installation pour la conservation limitée dans le temps d'objets, comprenant un convoyeur qui peut se déplacer le long d'une trajectoire au moins partiellement courbe et au moins partiellement inclinée, la trajectoire décrivant une spirale à trois dimensions avec plusieurs tours et le rayon de la spirale à trois dimensions diminuant vers le haut dans l'état de fonctionnement du convoyeur, de sorte qu'une partie supérieure de la trajectoire (8, 9) est plus proche de l'axe central de la spirale à trois dimensions que la partie inférieure de la trajectoire (7, 8) voisine, le convoyeur étant guidé sur plusieurs galets de retournement (1-5), une section de trajectoire rectiligne et ascendante (7-9) étant prévue entre chaque paire de galets de retournement qui se font face, l'axe central de la spirale à trois dimensions étant disposé dans le plan d'un premier axe de rotation d'un premier jeu de galets de retournement (1, 3, 5) disposés de façon concentrique et capables de rotation autour du premier axe de rotation et d'un deuxième axe de rotation d'un deuxième jeu de galets de retournement (2, 4) disposés de façon concentrique et capables de rotation autour du deuxième axe de rotation, au centre entre le premier axe de rotation et le deuxième, et les galets de retournement (1, 3, 5) capables de rotation autour du premier axe de rotation se trouvant en face des galets de retournement (2, 4) capables de rotation autour du deuxième axe de rotation, **caractérisée en ce qu'**une partie de trajectoire supérieure (8, 9) se trouve plus près de l'axe central de la spirale à trois dimensions que la partie de trajectoire inférieure (7, 8) voisine d'au moins la largeur du convoyeur.

2. Installation selon la revendication, **caractérisée en ce qu'**un entraînement d'extrémité (15) est prévu pour le convoyeur.

3. Installation selon la revendication 1, **caractérisée en ce qu'**un entraînement en courbe (16) est prévu pour le convoyeur.

4. Installation selon l'une des revendications 1 à 3, **caractérisée en ce que** le convoyeur relie les deux extrémités (13, 14) de la trajectoire en spirale à trois dimensions à l'intérieur de la trajectoire en spirale à trois dimensions, autrement dit s'étend de l'extrémité supérieure de la trajectoire en spirale à trois dimensions à l'origine inférieure de la trajectoire en spirale à trois dimensions, de sorte qu'il présente une trajectoire fermée, comme quoi le retour se trouvant à l'intérieur de la trajectoire en spirale à trois dimensions.

5. Installation selon l'une des revendications 1 à 3, **caractérisée en ce que** le convoyeur est un convoyeur à chaîne avec, suspendus à la chaîne, des récipients de transport pour les objets à conserver.

6. Installation selon l'une des revendications 1 à 3, **caractérisée en ce que** le convoyeur est un convoyeur à bande sur lequel les objets à conservés peuvent être posés.
